# EUROPÄISCHE PATENTSCHRIFT

(11) **EP 2 977 298 B1**
(45) Veröffentlichungstag und Bekanntmachung des Hinweises auf die Patenterteilung: **31.01.2018**
(21) Anmeldenummer: 15171392.2
(22) Anmeldetag: 10.06.2015
(51) Int. Cl.: B62D 25/08, B62D 27/06

(54) **FRONTENDMODUL**
FRONT-END MODULE
MODULE FRONTAL

(30) Priorität: 24.07.2014 DE 102014214561
(43) Veröffentlichungstag der Anmeldung: 27.01.2016
(73) Patentinhaber: Magna Exteriors GmbH, 63877 Sailauf (DE)
(72) Erfinder: Diehl, Peter, 73230 Kirchheim (DE); Mohr, Robert, 71384 Weinstadt (DE)
(74) Vertreter: Rausch, Gabriele

(56) Entgegenhaltungen:
- EP-A2- 1 251 038
- EP-A2- 2 284 066
- DE-A1- 19 603 957
- DE-A1-102010 022 738
- DE-A1-102012 019 092
- FR-A1- 2 879 553

## Beschreibung

Die Erfindung geht aus von einem Frontendmodul mindestens bestehend aus einem Querträger mit angebundenen Crashboxen und einem davon oberhalb beanstandet angeordneten Montageträger, wobei der Montageträger mit Stützelementen auf dem Querträger oder den Crashboxen aufgebracht ist

### Stand der Technik

Frontend-Module für Kraftfahrzeuge der genannten Art sind bekannt.
Im Allgemeinen bildet ein Frontend-Modul an einem Fahrzeug den vorderen Teil des Karosserieskeletts. Das Frontend-Modul weist obere und untere Elemente auf, welche jeweils horizontal an dem oberen Ende und dem unteren Ende angeordnet sind, und mindestens ein vertikales Element, welches sowohl zwischen den oberen als auch den unteren Elementen vertikal verbindet.
So ist aus der DE 100 42 037 A1 und EP 2284066A2 ein Frontend-Modul für ein Kraftfahrzeug mit einem rahmenförmigen Montageträger, einem etwa im mittleren Höhenbereich des Montageträgers angeordneten und mit diesem verbundenen Stossfängerquerträger, einem Aussenhautelement und mindestens einem Stossabsorptionselement zwischen dem Montageträger und dem Aussenhautelement bekannt.
Aus der DE10237454B3 ist ein Frontend-Modul für eine Fahrzeugkarosserie mit einem Zusatzelement vorgesehen, das sich von dem Stossfängerquerträger nach oben erstreckt. (Die Richtungsangabe "oben" bezieht sich, genauso wie die im folgenden verwendeten Richtungsangaben, auf die Einbaustellung des Frontend-Moduls in einem Kraftfahrzeug). An dem Zusatzelement ist die Stossfängerverkleidung angebracht.
FR 2935934 A1 zeigt einen Montageträger an dem Stützelemente angebracht sind, die sich auf einem Stoßfängerträger abstützen. Diese Stützelemente sind fest mit dem Montageträger verbunden. Dazu dient ein Verbindungselement, das durch Bohrungen am Kopf des Stützelements, sowie durch Bohrungen am Montageträger geschoben wird.

In der DE 102012019092 A1 wird eine Crashbox an einem Montageträger befestigt. Die Befestigung erfolgt mit Haltevorrichtungen, die als T-Stücke oder Bajonettverschlüsse ausgebildet sind.

Die DE102012021746 A1 beschreibt einen Montageträger für ein Front-end- Modul in einem Baukastensystem, das für eine Höhenanpassung des Montageträgers bezüglich des Fahrzeug-Querträgers ausgelegt ist. Dabei werden Stützelemente unterschiedlicher Bauhöhe verwendet und mit dem Montageträger verbunden.

Ausgehend von einem solchen Bausatzprinzip für die Anpassung der Bauhöhen des Montageträgers über dem Querträger, besteht die Aufgabe der Erfindung darin eine einfach zu montierende Verbindung zwischen unterschiedlichen Stützelementen und dem Montageträger herzustellen.

Gelöst wird die Aufgabe mit einem Frontendmodul mindestens bestehend aus einem Querträger mit angebundenen Crashboxen und einem davon oberhalb beanstandet angeordneten Montageträger, wobei der Montageträger mit Stützelementen auf dem Querträger oder den Crashboxen aufgebracht ist, und die Stützelemente mit unterschiedlichen Bauhöhen mit Einklipsverbindungen mit dem Montageträger verbunden sind.

Durch die Einklipsverbindungen zwischen Montageträger und Stützelementen können die Stützelemente einfach gegeneinander ausgetauscht werden. Es können Stützelemente von unterschiedlicher Höhe verwendet werden, um Anpassungen an die jeweiligen Bauhöhen des Fahrzeugs zu erreichen. Es können auch unterschiedliche Typen von Stützelementen verwendet werden. Durch die Einklipsverbindungen wird die Montage vereinfacht.
In einer vorteilhaften Ausgestaltung des Frontendmoduls ist der Montageträger aus einem Obergurt und einem Oberteil zusammengesetzt. Vorteilhafterweise besteht der Obergurt aus Metall.
Es ist weiterhin von Vorteil, wenn das Oberteil aus Kunststoff besteht. Diese Hybridstruktur des Montageträgers erlaubt eine flexible Herstellung des Trägers bei Optimierung des Gewichts und der Stabilität.

Vorteilhafterweise wird der Montageträger auch aus Vollkunststoff oder aus einer Kombination aus Organoblech mit Metall oder Leichtmetall hergestellt.
Der Montageträger kann für die jeweiligen Anforderungen optimiert auch aus Vollkunststoff hergestellt sein, oder aus einem Organoblech, das gegebenenfalls mit Metall oder Leichtmetall Bauteilen verstärkt ist. Der Montageträger muss für die Klipsverbindungen mindestens bereichsweise so flexibel sein, dass eine Klipsverbindungen hält.

Dafür ist es von Vorteil, dass das Oberteil oder Montageträger einen Klips zur Aufnahme eines Gegenstücks am Stützelement in Form einer Kante aufweist.

Ebenso ist es vorteilhaft, wenn das Oberteil oder der Montageträger eine Anlagenase zur Anlage eines Gegenstücks am Stützelement in Form eines Klips aufweist.

Es ist dabei von Vorteil, dass das Stützelement in y-Richtung in das Oberteil oder den Montageträger einklipsbar ist, um so eine einfache Montage der Stützelemente zu erlauben.
Um das Einklipsen auf einfache Art und Weise zu erlauben, ist das Stützelement und das Oberteil oder der Montageträger so aufgebaut, dass die Klipsverbindung in Fahrzeuglängsrichtung weist.

### Beschreibung der Erfindung

Die Erfindung wird nachfolgend beispielhaft unter Bezugnahme auf die beigefügte Zeichnung beschrieben.
Fig. 1 zeigt eine schematische Darstellung der beispielhaften Ausführungsform.
Fig. 2 zeigt eine zusammengebaute Version des Frontendmoduls
Fig. 3 zeigt ein Stützelement
Fig. 4 zwei Schnitte durch Ausführungsformen der Erfindung

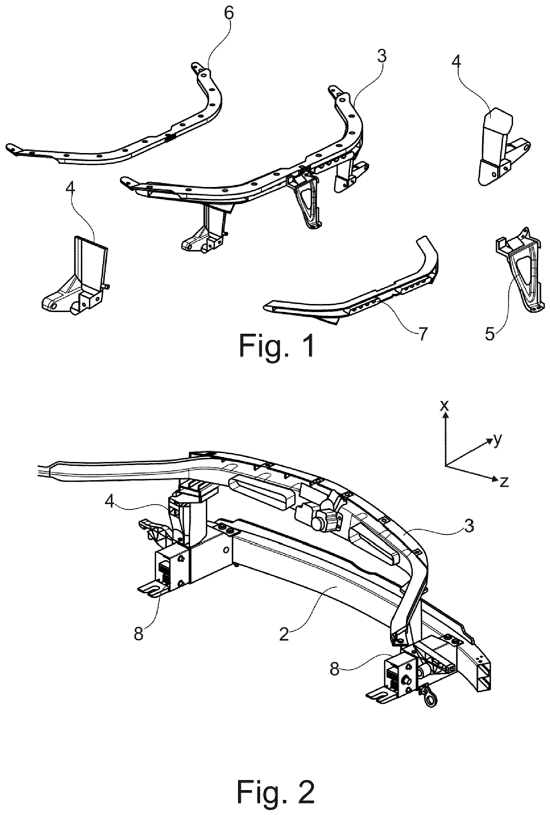

Figur zeigt in einer Explosionszeichnung wie der Zusammenbau eines Frontmoduls nach Figur 2 aufgebaut ist. Als Basis dient ein Querträger 2 an dem links und rechts Crashboxen 8 angebracht sind. Oberhalb in Richtung x ist ein Montageträger 3 mit Stützelementen 4 auf den Crashboxen aufgesetzt und befestigt.

Bei dem Querträger handelt es sich um ein Baustein aus Metall, der auf jede einem Fachmann bekannte Art hergestellt werden kann. Mit dem Querträger 2 fest verbunden sind Crashboxen, die auch aus unterschiedlichsten Materialien und in unterschiedlichsten Ausführungsformen hergestellt werden können. Die Crashboxen sind im Beispiel der Figur 2 über Schraubenverbindungen mit dem Querträger verbunden der Montageträger 3 ist auf unterschiedliche Art und Weise hergestellt. Im Beispiel der Figur 1 besteht der Montageträger aus einem metallischen Obergurt 6 mit einem Kunststoff-Oberteil 7. Eine Schlossstütze 5 für die Motorhaube ist ebenfalls zu erkennen. Die Stützelemente 4 sind erfindungsgemäß über Klipsverbindungen mit dem Kunststoff- Oberteil 7 verrastet. In der dargestellten Ausführungsform ist der Obergurt 6 einteilig aus Metall hergestellt es ist allerdings auch möglich eine dreiteilige Struktur aufzubauen mit einem Mittelteil und zwei Flügelteile. In einer weiteren vorteilhaften Ausgestaltung ist der Obergurt 6 aus einer Kombination aus Organoblech im Mittelteil mit Aluflügeln links und rechts davon aufgebaut.

Der Zusammenbau des Obergurts 6 ist dabei jeweils mit einem Kunststoff- Oberteil 7 verbunden.

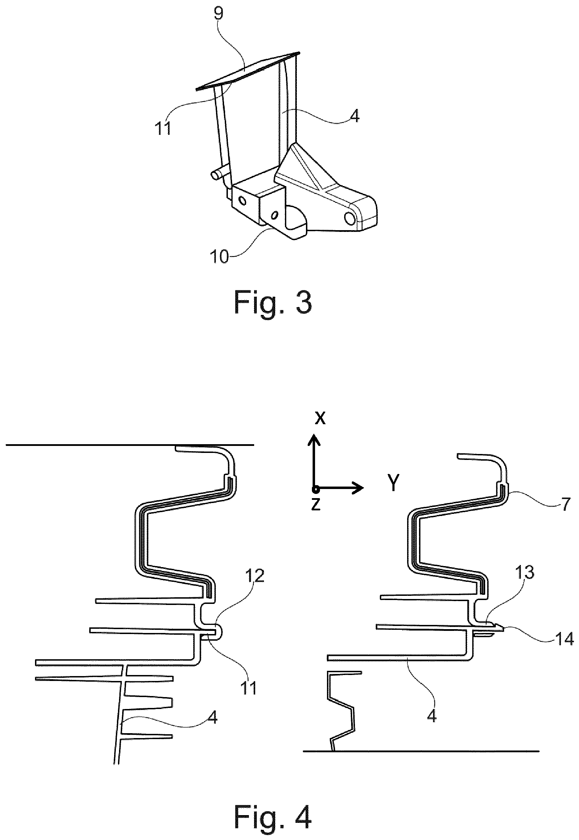

In einer weiteren vorteilhaften Ausführungsform wird Montageträger 3 aus Vollkunststoff hergestellt, wobei ein geschlossener Querschnitt mit den unterschiedlichen Schweißmethoden erzeugt wird. Die Stützelemente 4 werden jeweils in den Kunststoff eingeklipst. Dazu wird wie in Figur 3 dargestellt das Zwischenstück in etwa L-förmig ausgestaltet. Das Zwischenstück 4 weist dabei eine obere Auflage 9 zur Auflage am Oberteil 7 auf. Mit der Auflage 10 auf dem Crashelement 8 stützt sich das Stützelement ab. Das Stützelement 4 weist eine obere Kante 11 auf, die sich in etwa der Fahrzeuglängsachse erstreckt. Aus den weiteren Schnittbildern der Figur 4, die einen Schnitt durch Montageträger und Stützelement darstellen, ist die Art der Klipsverbindung zwischen den beiden Bauteilen zu erkennen. Auf der linken Seite des Schnitts ist die obere Kante 11 des Stützelementes 4 zu erkennen. Sie wird von einer klipsartigen Ausbildung umgriffen. Dem Klips 12 umfasst die gesamte Länge der oberen Kante 11 des Stützelements, oder auch nur Teilabschnitte. Die Verbindung verläuft entlang der oberen Kante 11 des Stützelementes 4. Auf der rechten Seite ist zu erkennen, dass der Montageträger 3 an seiner Unterseite in einer in die Fahrzeugquerrichtung ausgebildeten Anlagenase 13 endet. Das Stützelement 4 weist der gegen entlang der oberen Kante 11 einen Klips-haken 14 auf, der sich entlang der Kante in z-Richtung erstreckt.

Bei der Montage des Stützelements 4 in die Unterseite des Montageträgers 3 wird das Stützelement in etwa der Richtung y bis zur Klipsverbindung eingeschoben und dort verrastet. Anschließend kann der Montageträger über die Anbindungen des Stützelements, die unterschiedlich ausgebildet sein können, mit der Crashbox oder dem Längsträger verbunden werden. Durch den Einsatz der Klipsverbindungen ist das Frontendmodul mit Variationen aufbaubar. Dabei werden unterschiedliche Stützelemente mit unterschiedlichen Bauhöhen mit dem Montageträgern verklipst.

### Bezugszeichenliste

1 Frontendmodul
2 Querträger
3 Montageträger
4 Stützelement
5 Schlossstütze
6 Obergurt
7 Oberteil
8 Crashbox
9 Auflage oben
10 Auflage Crashelement
11 Obere Kante
12 Klips
13 Anlagenase
14 Klipshaken

## Patentansprüche

1. Frontendmodul (1) mit Variationen aufbaubar mindestens bestehend aus einem Querträger (2) mit angebundenen Crashboxen (8) und einem davon oberhalb beanstandet angeordneten Montageträger, wobei der Montageträger (3) mit Stützelementen (4) auf dem Querträger (2) oder den Crashboxen (8) aufgebracht ist, **dadurch gekennzeichnet, dass** die Stützelemente (4) für die Variationen des Frontendmoduls mit unterschiedlichen Bauhöhen mit Einklipsverbindungen mit dem Montageträger (3) verbunden sind.

2. Frontendmodul (1) nach Anspruch 1, **dadurch gekennzeichnet, dass** der Montageträger (3) aus einem Obergurt (6) und einem Oberteil (7) zusammengesetzt ist.

3. Frontendmodul (1) nach Anspruch 2, **dadurch gekennzeichnet, dass** der Obergurt (6) aus Metall besteht.

4. Frontendmodul (1) nach Anspruch 2, **dadurch gekennzeichnet, dass** das Oberteil (7) aus Kunststoff besteht.

5. Frontendmodul (1) nach Anspruch 1, **dadurch gekennzeichnet, dass** der Montageträger (3) aus Vollkunststoff oder einer Kombination aus Organoblech mit Metall oder Leichtmetall besteht.

6. Frontendmodul (1) nach einem der Ansprüche 2 bis 5, **dadurch gekennzeichnet, dass** das Oberteil (7) oder Montageträger (3) einen Klips (12) zur Aufnahme eines Gegenstücks am Stützelement in Form einer Kante (11) aufweist.

7. Frontendmodul (1) nach einem Ansprüche 2 bis 5, **dadurch gekennzeichnet, dass** das Oberteil (7) oder der Montageträger (3) eine Anlagenase (13) zur Anlage eines Gegenstücks am Stützelement in Form eines Klips (14) aufweist.

8. Frontendmodul (1) nach einem der Ansprüche 2 bis 7, **dadurch gekennzeichnet, dass** das Stützelement in y-Richtung der Fahrzeuglängsachse in das Oberteil (7) oder den Montageträger (3) einklipsbar ist.

9. Frontendmodul (1) nach einem der Ansprüche 2 bis 8, **dadurch gekennzeichnet, dass** das Stützelement und das Oberteil (7) oder der Montageträger (3) die Klipsverbindung in Fahrzeugquerrichtung aufweist (z).

## Claims

1. Front-end module (1) which can be constructed with variations, at least comprising a crossmember (2) with crash boxes (8) attached thereto and a mounting support arranged spaced apart therefrom and above said crossmember, wherein the mounting support (3) is attached by means of support elements (4) to the crossmember (2) or to the crash boxes (8), **characterized in that** the support elements (4) for the variations of the front-end module having different overall heights are connected by clip connections to the mounting support (3).

2. Front-end module (1) according to Claim 1, **characterized in that** the mounting support (3) is made up of an upper flange (6) and an upper part (7).

3. Front-end module (1) according to Claim 2, **characterized in that** the upper flange (6) consists of metal.

4. Front-end module (1) according to Claim 2, **characterized in that** the upper part (7) consists of plastics.

5. Front-end module (1) according to Claim 1, **characterized in that** the mounting support (3) consists entirely of plastics or an assembly of an organometallic sheet with metal or lightweight metal.

6. Front-end module (1) according to one of Claims 2 to 5, **characterized in that** the upper part (7) or the mounting support (3) comprises a clip (12) for receiving a mating part on the support element in the form of an edge (11).

7. Front-end module (1) according to one of Claims 2 to 5, **characterized in that** the upper part (7) or the mounting support (3) comprises a bearing lug (13) for bearing a mating part on the support element in the form of a clip (14).

8. Front-end module (1) according to one of Claims 2 to 7, **characterized in that** the support element is able to be clipped into the upper part (7) or the mounting support (3) in the y-direction of the vehicle longitudinal axis.

9. Front-end module (1) according to one of Claims 2 to 8, **characterized in that** the support element and the upper part (7) or the mounting support (3) have the clip connection in the vehicle transverse direction (z).

## Revendications

1. Module frontal (1) réalisable avec des variantes se composant au moins d'une traverse (2) avec des boîtes-tampons associées (8) et une poutre de montage (3) disposée à distance au-dessus de celle-ci, dans lequel la poutre de montage (3) est montée avec des éléments de support (4) sur la traverse (2) ou sur les boîtes-tampons (8), **caractérisé en ce que** les éléments de support (4) sont reliés à la poutre de montage (3) par des assemblages par clips de différentes hauteurs pour les variantes du module frontal.

2. Module frontal (1) selon la revendication 1, **caractérisé en ce que** la poutre de montage (3) est composée d'une aile supérieure (6) et d'une partie supérieure (7).

3. Module frontal (1) selon la revendication 2, **caractérisé en ce que** l'aile supérieure (6) se compose de métal.

4. Montage frontal (1) selon la revendication 2, **caractérisé en ce que** la partie supérieure (7) se compose de matière plastique.

5. Module frontal (1) selon la revendication 1, **caractérisé en ce que** la poutre de montage (3) se compose de matière plastique massive ou d'une combinaison d'une tôle organique avec un métal ou un métal léger.

6. Module frontal (1) selon l'une quelconque des revendications 2 à 5, **caractérisé en ce que** la partie supérieure (7) ou la poutre de montage (3) présente un clip (12) destiné à recevoir une pièce opposée sur l'élément de support sous la forme d'un rebord (11).

7. Module frontal (1) selon l'une quelconque des revendications 2 à 5, **caractérisé en ce que** la partie supérieure (7) ou la poutre de montage (3) présente un ergot d'appui (13) pour l'appui d'une pièce opposée sur l'élément de support sous la forme d'un clip (14).

8. Module frontal (1) selon l'une quelconque des revendications 2 à 7, **caractérisé en ce que** l'élément de support peut être encliqueté dans la partie supérieure (7) ou dans la poutre de montage (3) dans la direction y de l'axe longitudinal du véhicule.

9. Module frontal (1) selon l'une quelconque des revendications 2 à 8, **caractérisé en ce que** l'élément de support et la partie supérieure (7) ou la poutre de montage (3) présentent l'assemblage par encliquetage dans la direction transversale du véhicule (z).
